# EUROPÄISCHE PATENTSCHRIFT

(11) **EP 3 305 633 B1**
(45) Veröffentlichungstag und Bekanntmachung des Hinweises auf die Patenterteilung: **03.11.2021**
(21) Anmeldenummer: 17188976.9
(22) Anmeldetag: 01.09.2017
(51) Int. Cl.: B62D 59/04, B62D 53/04

(54) **STRASSENFAHRZEUG-ZUGKOMBINATION MIT EINER ZUGMASCHINE UND EINEM TRAILER ALS SATTELAUFLIEGER**
ROAD VEHICLE COMBINATION WITH A TRACTION UNIT AND A TRAILER PROVIDED AS SEMI-TRAILER
COMBINAISON VÉHICULE COUPLÉ-VÉHICULE ROUTIER COMPORTANT UN ENGIN MOTEUR ET UNE REMORQUE EN TANT QUE SEMI-REMORQUE

(30) Priorität: 02.09.2016 DE 102016010575
(43) Veröffentlichungstag der Anmeldung: 11.04.2018
(73) Patentinhaber: MAN Truck & Bus SE, 80995 München (DE)
(72) Erfinder: Wagner Dr., Philipp, 86316 Friedberg (DE); Fleischhacker Dr., Jan, 82140 Olching (DE); Ille, Thomas, 82223 Eichenau (DE); Kohrs Dr., Christian, 73207 Plochingen (DE); Kraaijenhagen, Ben, 82131 Stockdorf (DE)
(74) Vertreter: Liebl, Thomas

(56) Entgegenhaltungen:
- EP-A1- 1 170 199
- EP-A2- 0 074 236
- DE-A1-102006 030 347
- DE-A1-102008 001 565
- DE-U1- 29 719 229

## Beschreibung

Die Erfindung betrifft eine Straßenfahrzeug-Zugkombination nach dem Oberbegriff des Anspruchs 1.

Als Sattelauflieger ausgebildete Trailer sind allgemein bekannt und bestehen aus einem Trailer-Aufbau, an den im unteren hinteren Aufbaubereich eine oder mehrere Achsen als Laufachsen fest verbunden angeordnet sind. Im vorderen Aufbaubereich ragt mittig ein sogenannter Königszapfen nach unten ab, mit dem eine Kopplung mit einer Sattelplatte auf einer Sattelzugmaschine oder einem Dolly (Drehgestell) für den Fahrbetrieb als Sattelzug-Kombination durchführbar ist. Für eine Parkstellung ohne Kopplung an eine Sattelzugmaschine weist der Trailer zudem im vorderen Bereich einfahrbare und/oder abklappbare Stützfüße auf.

Bei einer solchen Sattelzug-Kombination erfolgt der Antrieb über wenigstens eine angetriebene Achse als Triebachse der Sattelzugmaschine. Bei langen und/oder schweren Zugkombinationen ist der Antrieb über eine einzelne Triebachse der Sattelzugmaschine oft nachteilig oder nicht möglich. So können bei schweren Zugkombinationen aber gleichzeitig mäßiger Achslast der Triebachse, neben erhöhtem Reifenverschleiß auch das frühzeitige Erreichen der Traktionsgrenze beobachtet werden. Aus diesem Grund kommen hier häufig 6x4 (sechs Räder bei vier angetriebenen Rädern) Sattelzugmaschinen zum Einsatz.

Aus der DE 10 2008 001 565 A1 ist ein Anhänger mit zumindest einer Achse und einer Sattelkupplung zur Aufnahme eines Sattelaufliegers bekannt, bei dem in den Anhänger eine elektrische Maschine integriert ist, die einen Energiespeicher als Antriebseinheit umfasst. Dabei kann die elektrische Maschine auch generatorisch betrieben werden, wobei der Energiespeicher durch Nutzung der kinetischen Energie des Anhängers oder der Bremsanlage geladen werden kann.

Die weitere EP 1 170 199 A1 offenbart einen kombinierten Auflieger zum Transport schwerer Geräte und Maschinen. Der Auflieger weist hier eine Hinterachsgruppe, ein Lenkteil, Kopplungssysteme und ein Ladebett auf. Dabei ist ein Ladeobjekt einerseits mit der Hinterachsgruppe und andererseits mit dem, auf einen Sattelschlepper aufsetzbaren Lenkteil direkt und lösbar verbunden, wobei das Ladeobjekt mit Luftfederungen der Hinterachsgruppe und des Sattelschleppers zu kuppeln, anzuheben und abzusenken ist.

Aufgabe der Erfindung ist es, einen Trailer als Sattelauflieger so weiterzubilden, dass damit die Energieeffizienz der gesamten Sattel-Kombination sowie fahrdynamische Eigenschaften verbessert und Funktionen und Einsatzmöglichkeiten vergrößert werden.

Diese Aufgabe wird gelöst mit den Merkmalen der unabhängigen Patentansprüche. Bevorzugte Weiterbildungen sind in den Unteransprüchen offenbart.

Gemäß Patentanspruch 1 wird eine Straßenfahrzeug-Zugkombination mit einer Zugmaschine, insbesondere mit einer Sattelzugmaschine, und einem Trailer als Sattelauflieger vorgeschlagen, wobei der Trailer einen Trailer-Aufbau und wenigstens zwei im hinteren Aufbaubereich angeordnete Achsen aufweist. Erfindungsgemäß besteht der Trailer aus zwei voneinander unabhängigen und koppelbaren Trailer-Baueinheiten. Als erste Baueinheit ist der Trailer-Aufbau in der Art einer aufständerbaren Wechselbrücke bzw. als aufständerbarer Ladungsträger ausgebildet. Als zweite Baueinheit ist ein eigenständig fahrbares bzw. mit einer eigenen Antriebseinheit antreibbares, im unteren hinteren Aufbaubereich von unten her an den Trailer-Aufbau an- und abkoppelbares, sowie verriegelbares Trailerachsmodul vorgesehen, an dem die wenigstens zwei Achsen angeordnet sind. Wenigstens eine Achse des Trailerachsmoduls ist als Antriebsmodul und zeitweise Triebachse der Zugkombination mit einer mittels einer Steuereinheit in Abhängigkeit von dem ermittelten Fahrbetriebszustand und dem ermittelten Antriebsbedarf der Zugkombination automatisch ansteuer- und aktivierbaren, sowie zeitlich begrenzt zuschaltbaren Antriebseinheit ausgebildet.

Ein Antriebsbedarf zusätzlich zum Zugmaschinenantrieb kann hier als positiver Bedarf, zum Beispiel beim Anfahren oder Beschleunigen zur Unterstützung des Zugmaschinenantriebs oder als negativer Bedarf, zum Beispiel beim Bremsen, gegebenenfalls in Verbindung mit einer Rekuperation und einem Energiespeicher ermittelt werden. Die Daten von Fahrbetriebszuständen können in der Zugmaschine erfasst und gegebenenfalls zusammen mit Steuersignalen an das jeweilige Antriebsmodul weitergleitet werden oder können direkt im Antriebsmodul bzw. dem Trailerachsmodul mit einer dortigen Sensorik unabhängig oder zumindest teilweise unabhängig von der Zugmaschine erfasst und gegebenenfalls ausgewertet werden. Entsprechend können auch Elemente der Steuereinheit insgesamt im Antriebsmodul bzw. dem Trailerachsmodul oder bei entsprechend angepasster Sattelzugmaschine auch ganz oder zumindest teilweise dort angeordnet sein.

Bei nicht aktiviertem Antriebsmodul sind die eine oder gegebenenfalls mehrere zugeordnete Antriebseinheiten nicht im Eingriff oder laufen leer mit, so dass dann eine bedarfsweise zuschaltbare Triebachse in der Funktion einer an sich bekannten Laufachse verwendet ist.

In einer besonders bevorzugten Ausführungsform ist die Vorrichtung zum An- und Abkoppeln des Trailerachsmoduls am Trailer-Aufbau entsprechend einer Sattelplatte-Königszapfen-Verbindung mit einer Sattelplatte auf dem Trailerachsmodul und einem Königszapfen an der hinteren Unterseite des Trailer-Aufbaus ausgebildet. Dies ist ein zweiter Königszapfen zusätzlich zu einem ersten, weiter vorne angeordneten Königszapfen für die Kopplung mit einer Sattelzugmaschine.

Weiter weist die Verriegelungsvorrichtung wenigstens einen betätigbaren Verriegelungsbolzen am Trailerachsmodul und/oder am Trailer-Aufbau auf. Im an den Trailer-Aufbau angekoppelten Zustand des Trailerachsmoduls bei verriegelter Verriegelungsvorrichtung ist das Trailerachsmodul für einen Straßenfahrmodus in Geradeausfahrtrichtung ausgerichtet. Gegebenenfalls können auch im Straßenfahrmodus Räder des Trailerachsmoduls lenkbar ausführt sein.

Bei nicht verriegelter Verriegelungsvorrichtung und bestehender Sattelplatte-Königszapfen-Verbindung mit dem Trailer-Aufbau ist das Trailerachsmodul um den Königszapfen als Schwenkachse schwenkbar. Damit sind vorteilhaft kleine Wendekreise oder auch ein schräges bzw. seitliches Rangieren mit und/oder Sattelzugmaschine möglich. Ohne Sattelzugmaschine kann das Trailerachsmodul bei geeigneten Stützrädern am Trailer-Aufbau in der Art eines Unterflurfahrzeugs zum Rangieren in einem Rangiermodus insbesondere bei geringen Geschwindigkeiten verwendet werden.

Da bei entriegelter Verriegelungseinrichtung mit dem Königszapfen und der Sattelplatte des Trailerachsmoduls nur eine Einpunkt-Abstützung vorliegt, kann für eine verkantungsfreie Bewegung zwischen dem Trailerachsmodul und dem Trailer-Aufbau, vorzugsweise im Bereich einer Verriegelungseinrichtung, zweckmäßigerweise eine Kulissen- oder Gleitführung vorgesehen sein.

Für eine stabile Dreipunktabstützung des Trailerachsmoduls im gekoppelten und verriegelten Zustand sollen die Sattelplatte und zu beiden Seiten des Trailerachsmoduls angeordnete Verriegelungsbolzen oder Bolzenaufnahmen eine Dreieckanordnung bilden. Eine Kulissen- oder Gleitführung kann dann zwischen den Verriegelungsbolzen und/oder entsprechenden Bolzenaufnahmen angeordnet sein. Das Trailerachsmodul kann mit entsprechender Sensorik automatisch oder gegebenenfalls manuell am Trailer-Aufbau gekoppelt und/oder verriegelt werden.

Grundsätzlich können eine oder mehrere Achsen des Trailerachsmoduls lenkbar oder starr und/oder bedarfsweise angetrieben ausgebildet werden. Für eine konkrete vorteilhafte Realisierung wird vorgeschlagen, dass das Trailerachsmodul wenigstens eine gelenkte Achse, vorzugsweise als nicht antreibbare Laufachse mit Achsschenkellenkung und Lenktrapez, aufweist, wobei die Lenkung gegebenenfalls durch einen radselektiven bzw. seitenweisem Antrieb an einer Triebachse mit zugeordneter Drehmomentverteilung unterstützbar ist und zudem vorzugsweise den linken und rechten Rädern zur Verschleißminimierung nach Ackermann lenkbar sind. Bekanntlich werden bei einer Lenkung nach Ackermann ein kurvenaußenseitiges Rad weniger geschwenkt als ein kurveninnenseitige Rad. Zudem soll eine solche Lenkung im verriegelten Fahrmodus des Trailerachsmoduls in Geradeausrichtung gegebenenfalls in Verbindung mit der Betätigung der Verriegelungseinrichtung blockierbar sein. Damit wird eine nicht lenkbare Nachlaufachse hergestellt, so dass der Fahrbetrieb und die Technik relativ einfach durchführbar ist. Die Verriegelung und die Blockierung, insbesondere mit einem betätigbaren Blockierzylinder, können aufeinander abgestimmt automatisiert durchgeführt werden. Grundsätzlich kann gegebenenfalls jedoch auch die Lenkung bei Bedarf auch im Fahrmodus unverriegelt betätigt werden.

Im Fahrmodus bei blockierter Lenkung erfolgt der Antrieb der angetriebenen Räder einer Triebachse vorzugsweise synchron während im unverriegelten, und nicht blockierten Rangiermodus je nach den Gegebenheiten auch ein seiten- bzw. radselektiver Antrieb möglich sein soll.

In einer Weiterbildung des Trailerachsmoduls für eine weitere Verwendung kann dieses als eine Art Kombination eines Trailerachsmoduls und Dollys heckseitig mit einem Bereich für eine zweite Sattelplatte verlängert sein. Eine solche zweite Sattelplatte kann zur Ankopplung eines weiteren Trailers verwendet werden und weist vorzeitig einen nach hinten gerichteten Einfahrspalt auf. In diesem Verlängerungsbereich ist dann für eine Abstützung des zweiten Trailers wenigstens eine, gegebenenfalls lenkbare und gegebenenfalls antreibbare Achse angeordnet.

Zur Abstützung eines nicht an einer Sattelzugmaschine angekoppelten Trailer-Aufbaus ohne Trailerachsmodul soll der Trailer-Aufbau hintere einfahr- und/oder anklappbare Stützfüße und wenigstens ein vorderes einfahr- und/oder anklappbares Stützrad aufweisen. Die Höhe der Stützfüße und des wenigstens einen Stützrads müssen wenigstens die Höhe des Trailerachsmoduls aufweisen. Die Betätigung der Stützfüße und/oder des wenigstens einen Stützrads soll vorzugsweise automatisch, vorzugsweise vom Trailerachsmodul aus elektrisch, hydraulisch oder pneumatisch gesteuert werden.

Die Antriebseinrichtung eines Antriebsmoduls soll so ausgebildet sein, dass die Räder bzw. die Radgruppen einer Triebachse unter Berücksichtigung betriebsbedingter Drehzahlunterschiede dieser Räder bzw. Radgruppen antreibbar sind.

In einer weiter konkretisierten Ausführungsform soll wenigstens ein Antriebsmodul eines Trailerachsmoduls eine Versorgungsleitung für eine Energieversorgung, insbesondere zur steckbaren Kopplung, mit einer Zugmaschine aufweisen, zusammen mit einer separaten oder kombinierten Datenleitung und/oder einer kabellosen Verbindung zu einer Zugmaschine zur Kommunikation, insbesondere für eine Übermittlung und/oder zum Datenaustausch von Status- und/oder Steuerungsdaten. Dazu kann eine Ausstattung mit einer Hochvoltsteckverbindung vorgesehen sein, die neben der Energieversorgung auch eine Signalkommunikation erlaubt.

Ebenso kann eine Bremspneumatik vom Trailerkopf bis zu einer Kupplung, vorzugsweise einer Schnellkupplung, zum Trailerachsmodul ausgehend von der Zugmaschine weitergeführt werden.

In einer besonders vorteilhaften Ausführung weist das wenigstens eine Antriebsmodul eines Trailerachsmoduls eine Energiespeichereinheit auf, aus der die Antriebseinheit gesteuert ausschließlich, beispielsweise im Rangiermodus ohne Zugmaschine, oder zusätzlich zu einer weiteren Energieversorgung, zum Beispiel von einer Zugmaschine zumindest über einen begrenzten Zeitraum mit Energie versorgbar ist. Die Ladung einer solchen Energiespeichereinheit kann je nach den Gegebenheiten und je nach der Ausstattung durch die Zugmaschine, durch Rekuperation oder gegebenenfalls durch Induktion über Ladeschleifen im Boden erfolgen.

Zum Betrieb der Antriebseinheit eines Trailerachsmoduls wird vorgeschlagen, dass wenigstens ein Antriebsmodul fahrbetriebsabhängig und bedarfsweise, gegebenenfalls mit variierbarer Leistung bei zumindest einem Teil der folgenden durch Kommunikation mit der Sattelzugmaschine und/oder durch eine Sensorik des Trailerachsmoduls vorgegebenen oder festgestellten Betriebszustände selbsttätig aktivierbar und zuschaltbar ist oder individuell von Hand insbesondere ferngesteuert, zuschaltbar ist, wobei die Zuschaltbedingungen einzeln vorliegen können oder auch kombinierbar sind:
a) im kompletten Zugbetrieb und Fahrmodus beim Beschleunigen und/oder in Steigungen und/oder beim Anfahren und/oder
b) als Boostfunktion zur kurzfristigen Überbrückung bzw. Ergänzung eines Zugmaschinen-Verbrennungsmotormoments, insbesondere mit einer (teilweisen) Entladung eines Energiespeichers,
c) in abgeschlossenen Geländen, zum Beispiel in Logistikzentren zum Rangieren an Laderampen, insbesondere mit einer entriegelten Verriegelungseinrichtung zwischen Trailer-Aufbau und Trailerachsmodul und insbesondere ohne Zugmaschinenantrieb, wobei dann die Energieversorgung aus einem Energiespeicher oder berührungslos mittels Ladeschleifen im Boden durch Induktion erfolgen kann, und/oder
d) zur Steigerung der Bremswirkung im Gefälle, insbesondere in Verbindung mit einer Aufladung eines Energiespeichers durch Rekuperation und/oder
e) zur temporären Energiespeicherung in Kombination mit einem GPS-abhängigen Geschwindigkeitsregler.

Grundsätzlich kann als Antriebseinheit eines Antriebsmoduls ein (kleiner) Verbrennungsmotor verwendet werden. Ein solches Konzept ist jedoch nur schwierig realisierbar und handhabbar, so dass vorzugsweise andere alternative Antriebskonzepte verwendet werden sollen:
In einer bevorzugten Ausführungsform wird in der Antriebseinheit eines Antriebsmoduls wenigstens ein Elektromotor verwendet, der direkt an der Triebachse, gegebenenfalls direkt an den angetriebenen Rädern, insbesondere in Form von Radnabenmotoren, angeordnet ist. Die Stromversorgung sowie eine Signalkommunikation kann dazu über eine Steckverbindung, insbesondere über eine Hochvoltsteckverbindung, von der Zugmaschine her erfolgen. Besonders vorteilhaft kann hier im Antriebsmodul zudem ein elektrischer Energiespeicher als Akku zur Rekuperation bei Bremsvorgängen und zum Energiemanagement angeordnet sein.

Bei einer solchen Ausstattung des Antriebsmoduls mit geeigneter Technik und Sensorik ist damit einfach die Anwendung im Bereich von Logistikzentren möglich, insbesondere zum fahrerlosen Rangieren der Zugkombinationen oder Teilen der Zugkombination bei niedriger Geschwindigkeit an Laderampen oder ähnlichem.

Alternativ kann zum Antrieb ein bedarfsgerecht zuschaltbarer Hydraulikmotor, gegebenenfalls in Verbindung mit einem Druckspeicher als kurzfristige Energiespeichereinheit mit einer Hydraulikverbindung zur Zugmaschine verwendet werden. Auch eine Kombination aus Hydraulikmotor und elektrischer Maschine kann je nach den Gegebenheiten zweckmäßig sein, wobei dann die Energieversorgung hydraulisch, der Energiehaushalt im Antriebsmodul jedoch elektrisch organisierbar ist.

Zur Lösung der bereits genannten Aufgabe wird ferner ein Trailerachsmodul für einen Trailer als Sattelauflieger beansprucht, mit wenigstens zwei Achsen und einer Antriebseinheit, mittels der die Räder wenigstens einer Achse und somit auch das Trailerachsmodul antreibbar ist, und wobei das Trailerachsmodul an einem unteren hinteren Bereich eines Aufbaus des Trailers von unten her an den Trailer-Aufbau an- und abkoppelbar sowie verriegelbar ist.

Zudem wird auch ein Trailer als Sattelauflieger beansprucht, mit einem Trailer-Aufbau und wenigstens zwei im hinteren Aufbaubereich angeordneten Achsen. Erfindungsgemäß ist vorgesehen, dass der Trailer-Aufbau in der Art einer aufständerbaren Wechselbrücke ausgebildet ist, und dass ein eigenständig fahrbares bzw. mit einer eigenen Antriebseinheit antreibbares, im unteren hinteren Aufbaubereich von unten her an den Trailer-Aufbau an- und abkoppelbares sowie verriegelbares Trailerachsmodul vorgesehen ist, an dem die wenigstens zwei Achsen angeordnet sind.

Die sich durch das erfindungsgemäße Antriebsmodul und den erfindungsgemäßen Trailer ergebenden Vorteile sind identisch mit den bereits gewürdigten Vorteilen der erfindungsgemäßen Zugkombination, so dass diese an dieser Stelle nicht wiederholt werden.

Die Erfindung und ihre vorteilhaften Aus- und/oder Weiterbildungen sowie deren Vorteile werden nachfolgend anhand von Zeichnungen lediglich beispielhaft näher erläutert.

Es zeigen:
- Figur 1: ein Trailerachsmodul in einer Seitenansicht,
- Figur 2: das Trailerachsmodul nach Figur 1 in einer Draufsicht,
- Figur 3: das Trailerachsmodul nach Figur 1 in einer Ansicht von unten,
- Figur 4: eine Sattelzugkombination aus einer Sattelzugmaschine und einem Trailer mit einem Trailerachsmodul,
- Figur 5: eine schematische Darstellung, aus der der Aufbau eines Antriebsmoduls des Trailerachsmoduls hervorgeht,
- Figur 6: eine Ansicht der Sattelzugkombination nach Figur 4 von unten,
- Figur 7: eine Traileransicht von unten nach Figur 6 ohne Sattelzugmaschine,
- Figur 8: einen Trailer-Aufbau in einer Parkposition,
- Figur 9: eine lange Sattelzugkombination aus einer Sattelzugmaschine und einem ersten Trailer mit einem modifizierten Trailerachsmodul und einem zweiten Trailer,
- Figur 10: das modifizierte Trailerachsmodul nach Figur 9 vergrößert in einer Seitendarstellung,
- Figur 11: das Trailerachsmodul nach Figur 10 in einer Ansicht von unten,
- Figur 12: ein Trailerachsmodul ähnlich Figur 10 in einer weiteren Ausgestaltung, und
- Figur 13: das Achsmodul nach Figur 12 in einer Ansicht von unten.

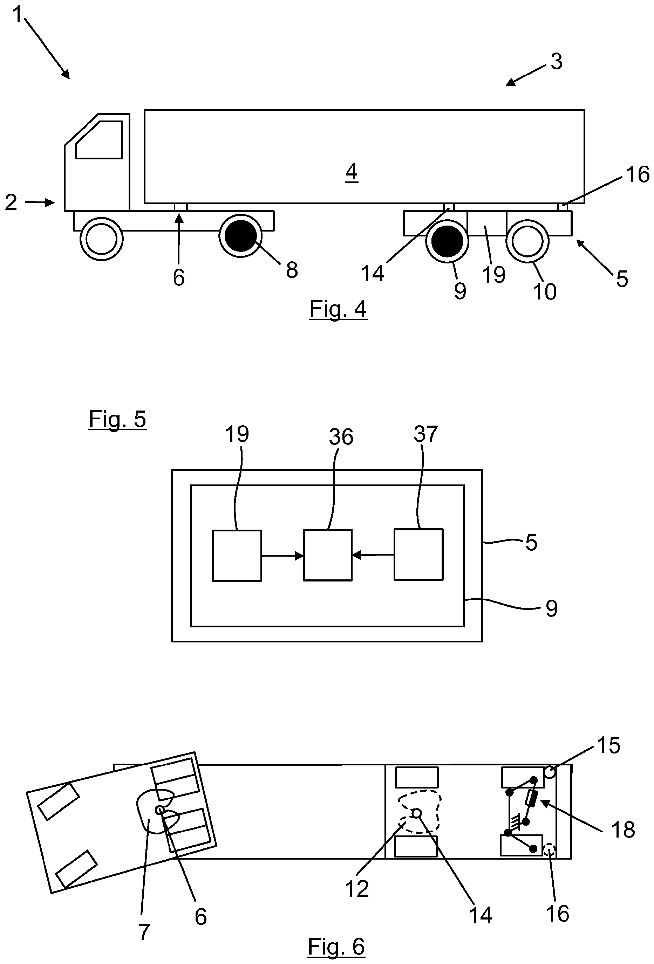

In Figur 4 ist schematisch eine Sattelzugkombination 1 dargestellt, bestehend aus einer Sattelzugmaschine 2 und einem Trailer 3 als Sattelauflieger. Der Trailer 3 besteht aus zwei koppelbaren und trennbaren Baueinheiten, einer ersten Baueinheit als Trailer-Aufbau 4 und einer zweiten Baueinheit als Trailerachsmodul 5. Der Trailer 3 ist in üblicher Weise mit einer Sattelkupplung bestehend aus einem vom Trailer-Aufbau 4 nach unten abragenden Königszapfen 6 und einer Sattelplatte 7 auf dem Fahrgestell der Sattelzugmaschine 2, die in Figur 5 schematisch angegeben ist.

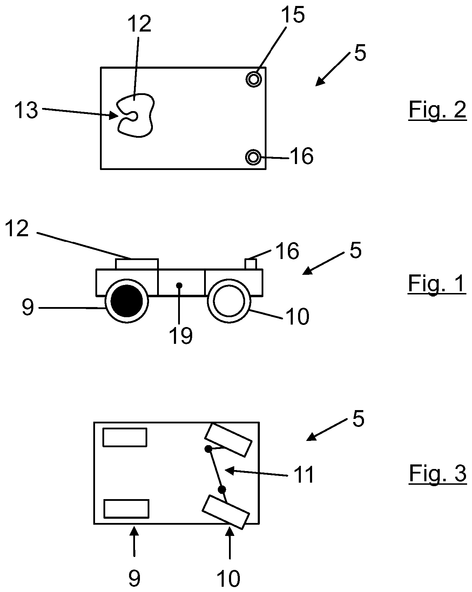

In den Figuren 1, 4, 8, 10 und 12 sind die Achsen, die sowohl als permanente als auch zuschaltbare Triebachsen ausgeführt sind, durch schwarze Felgenflächen der jeweils linksseitig sichtbaren Räder gekennzeichnet. Ersichtlich hat die Sattelzugmaschine 2 zwei Achsen, von denen die Hinterachse eine permanente Triebachse 8 ist.

In den Figuren 1 bis 3 ist das Trailerachsmodul 5 als eigenständig fahrbare Baueinheit dargestellt:
Die hier gezeigte Ausführungsform des Trailerachsmoduls 5 weist zwei Achsen auf, von denen die vordere Achse als Antriebsmodul und zeitweise Triebachse 9 ausgeführt ist. Die zweite Achse ist als Lenkachse 10 mit einer Achsschenkellenkung 11 ausgeführt.

Auf dem Trailerachsmodul 5 ist, wie aus Figur 2 ersichtlich, eine Sattelplatte 12 mit einem in Fahrtrichtung ausgerichteten Einfahrspalt 13 angeordnet. Diese Sattelplatte 12 dient zur Herstellung einer Sattelplatte-Königszapfen-Verbindung mit dem Trailer-Aufbau 4, an dem dazu ein dem Trailerachsmodul 5 zugeordneter zweiter Königszapfen 14 angeordnet ist.

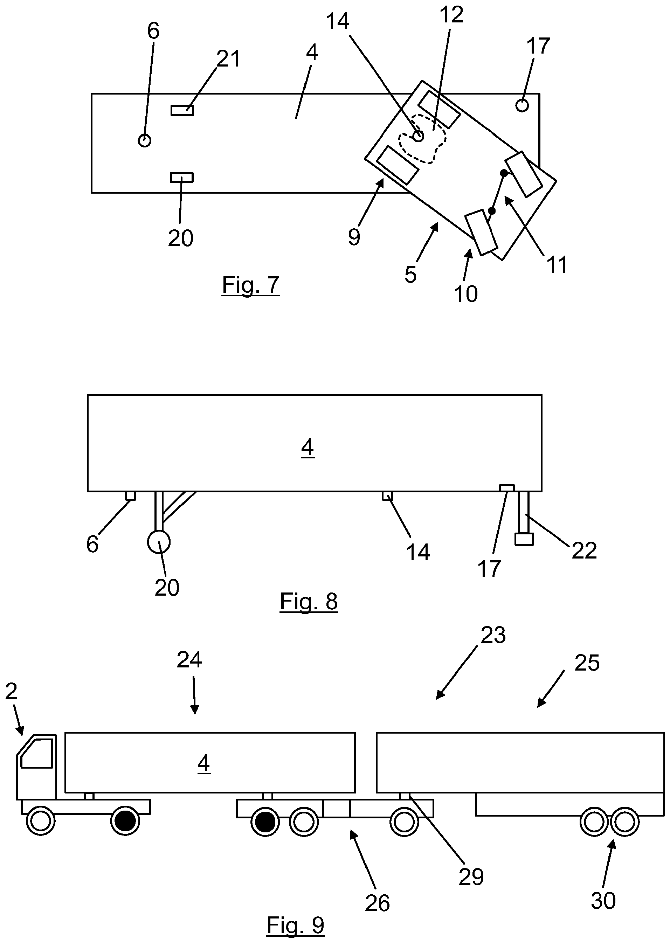

Weiter sind im hinteren Bereich an beiden Seiten des Trailerachsmoduls 5 ausfahrbare Verriegelungsbolzen 15, 16 angeordnet, die für eine Verriegelung des Trailerachsmoduls 5 in der in Figur 6 dargestellten Geradeausfahrrichtung in zugeordnete Bolzenaufnahmen am Trailer-Aufbau 4 eingreifen können (siehe Figur 7). In diesem Zustand als Fahrmodus ist die Achsschenkellenkung 11 mittels eines Blockierzylinders 18 in Geradausfahrrichtung der Räder blockiert.

In Fig. 5 ist der Aufbau der Vorderachse bzw. des Antriebsmoduls 9 des Trailerachsmoduls 5 gezeigt. Die Vorderachse 9 weist eine Antriebseinheit 36 auf, mittels der die Räder der Vorderachse 9 angetrieben werden können. Die Antriebseinheit 36 ist hier beispielhaft durch einen Elektromotor gebildet, der mittels einer Steuereinheit 37 des Antriebsmoduls 9 angesteuert werden kann. Wird der Trailer 3 von der Zugmaschine 1 gezogen, wird der Elektromotor 36 in Abhängigkeit von dem mittels der Steuereinheit 37 ermittelten Fahrbetriebszustand der Zugkombination 1 und dem ebenfalls mittels der Steuereinheit 37 ermittelten Antriebsbedarf der Zugkombination 1 automatisch angesteuert und zeitlich begrenzt zugeschaltet bzw. aktiviert, so dass die Hinterachse 9 des Trailerachsmoduls 5 zeitweise von einem Laufachsenmodus in einen Triebachsenmodus geschaltet wird.

Weiter weist das Antriebsmodul 9 hier auch einen energieübertragend mit dem Elektromotor 36 verbundenen, elektrischen Energiespeicher 19 als Elektroakku auf, mittels der der Elektromotor 36 mit elektrischer Energie versorgt werden kann. Gemäß Fig. 1 ist der Energiespeicher 19 hier im mittleren Bereich des Trailerachsmoduls 5 angeordnet.

In Figur 7 ist ein Zustand dargestellt (von unten), bei dem der Trailer-Aufbau 4 von der Sattelzugmaschine 2 getrennt ist und beidseitig im Bereich des ersten Königszapfens 6 Stützräder 20, 21 ausgefahren sind. Zudem ist die Verriegelung mit dem Verriegelungsbolzen 15, 16 sowie die Blockierung mit dem Blockierzylinder 18 gelöst, so dass das Trailerachsmodul 5 insbesondere für Rangiervorgänge mit kleinen Wendekreisen um den zweiten Königszapfen 14 schwenkbar ist. Der Trailer-Aufbau 4 kann gelenkt vom Trailerachsmodul 5 mit den Stützrädern 20, 21 gezogen werden.

In Figur 8 ist schematisch die Parkposition des Trailer-Aufbaus 4 ähnlich einer Wechselbrücke gezeigt, wobei zusätzlich zu den Stützrädern 20, 21 hintere Stützen 22 ausgefahren sind. Zudem sind hier der erste Königszapfen 6 und der zweite Königszapfen 14 sowie eine Bolzenaufnahme 17 dargestellt.

In Figur 9 ist eine weitere Ausführungsform einer langen Sattelzugkombination 23 dargestellt, mit einer Sattelzugmaschine 2 entsprechend Figur 4, einem ersten Trailer 24 und einem zweiten Trailer 25.

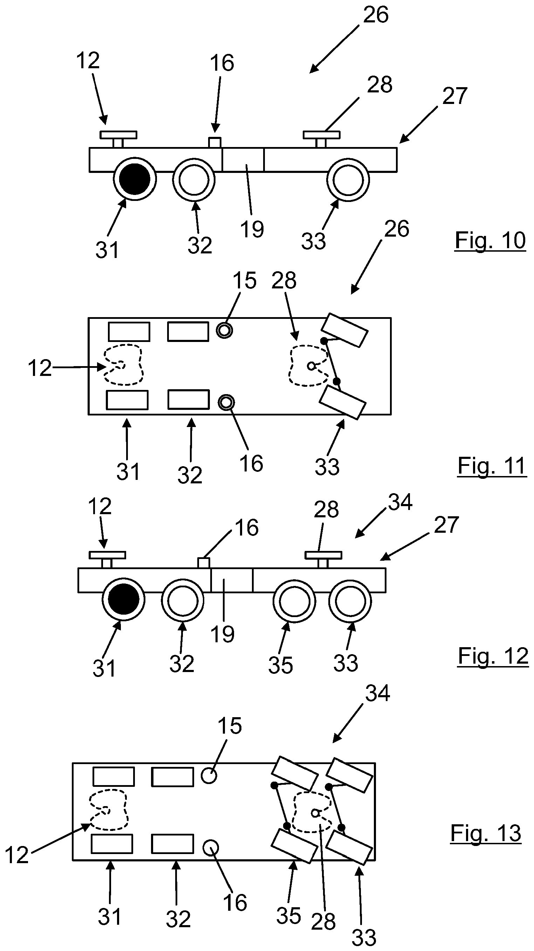

Der erste Trailer 24 besteht hier aus einem Trailer-Aufbau 4 entsprechend der ersten Ausführungsform nach Figur 7 jedoch mit einem modifizierten Trailerachsmodul, das im Detail in den Figuren 10 und 11 gezeigt ist. Im Vergleich zur ersten Ausführungsform des Trailerachsmoduls nach den Figuren 1 bis 3 ist das modifizierte Trailerachsmodul 26 eine Art Kombination Trailerachsmodul-Dolly mit einem heckseitigen Verlängerbereich 27, auf dem eine zweite Sattelplatte 28 angebracht ist zur Verbindung mit einem Königszapfen 29 des zweiten Trailers 25 mit zwei fest angeordneten, nicht antreibbaren Laufachsen 30. Beim Trailerachsmodul 26 ist die erste Achse als bedarfsgerecht zuschaltbare und nicht lenkbare Triebachse 31 und die zweite Achse als nicht lenkbare Laufachse 32 ausgebildet. Die dritte Achse unter dem Verlängerungsbereich 27 ist dagegen als lenkbare Laufachse 33 ausgeführt. Weiter sind Verriegelungsbolzen 15, 16 ersichtlich. Auch bei der modifizierten Ausführungsform des Trailerachsmoduls 26 ist ein Energiespeicher 19 vorgesehen.

In den Figuren 12 und 13 ist eine weitere Ausführungsform eines Trailerachsmoduls 34 gezeigt, das im Wesentlichen der Ausführungsform des Trailerachsmoduls 26 nach den Figuren 10 und 11 entspricht, so dass gleiche Teile mit gleichen Bezugszeichen versehen sind. Die Ausführungsform des Trailerachsmoduls 34 nach den Figuren 12 und 13 ist für eine verbesserte Abstützung des zweiten Trailers 25 mit einer zweiten lenkbaren Laufachse 35 im Verlängerungsbereich 27 ausgerüstet.

### Bezugszeichenliste

- 1: Sattelzugkombination
- 2: Sattelzugmaschine
- 3: Trailer
- 4: Trailer-Aufbau
- 5: Trailerachsmodul
- 6: erster Königszapfen
- 7: Sattelplatte
- 8: Triebachse
- 9: Triebachse
- 10: Lenkachse
- 11: Achsschenkellenkung
- 12: Sattelplatte
- 13: Einfahrspalt
- 14: zweiter Königszapfen
- 15: Verriegelungsbolzen
- 16: Verriegelungsbolzen
- 18: Blockierzylinder
- 19: Energiespeicher
- 20: Stützrad
- 21: Stützrad
- 22: Stützen
- 23: Sattelzugkombination
- 24: erster Trailer
- 25: zweiter Trailer
- 26: Trailerachsmodul
- 27: Verlängerungsbereich
- 28: Sattelplatte
- 29: Königszapfen
- 30: Laufachsen
- 31: Triebachse
- 32: Laufachse
- 33: Laufachse
- 34: Trailerachsmodul
- 35: Laufachse
- 36: Antriebseinheit
- 37: Steuereinheit

## Patentansprüche

1. Straßenfahrzeug-Zugkombination, mit einer Zugmaschine, insbesondere mit einer Sattelzugmaschine, und einem Trailer als Sattelauflieger, wobei der Trailer einen Trailer-Aufbau und wenigstens zwei im hinteren Aufbaubereich angeordneten Achsen aufweist,
**dadurch gekennzeichnet,**
**dass** der Trailer-Aufbau (4) in der Art einer aufständerbaren Wechselbrücke ausgebildet ist,
**dass** ein eigenständig fahrbares, im unteren hinteren Aufbaubereich von unten her an den Trailer-Aufbau (4) an- und abkoppelbares sowie verriegelbares Trailerachsmodul (5; 26; 34) vorgesehen ist, an dem die wenigstens zwei Achsen (9, 10; 31, 32, 33; 35) angeordnet sind, und
**dass** wenigstens eine Achse des Trailerachsmoduls (5; 26; 34) als Antriebsmodul und zeitweise Triebachse (9; 31) der Zugkombination (1) mit einer mittels einer Steuereinheit (37) in Abhängigkeit von dem ermittelten Fahrbetriebszustand und dem ermitteltem Antriebsbedarf der Zugkombination (1) automatisch ansteuerbaren und zeitlich begrenzt zuschaltbaren Antriebseinheit (36) ausgebildet ist.

2. Straßenfahrzeug-Zugkombination nach Anspruch 1, **dadurch gekennzeichnet,**
**dass** die Vorrichtung zum An- und Abkoppeln des Trailerachsmoduls (5; 26; 34) an dem Trailer-Aufbau (4) entsprechend einer Sattelplatte-Königszapfen-Verbindung mit einer Sattelplatte (12) auf dem Trailerachsmodul (5; 26; 34) und einem Königszapfen (14) an der Unterseite des Trailer-Aufbaus (4) ausgebildet ist, und
**dass** die Verriegelungsvorrichtung wenigstens einen betätigbaren Verriegelungsbolzen (15, 16) am Trailerachsmodul (5; 26; 34) und/oder am Trailer-Aufbau (4) aufweist, wobei das Trailerachsmodul (5; 26; 34) im angekoppelten Zustand bei verriegelter Verriegelungsvorrichtung für einen Straßenfahrmodus in Geradeausfahrtrichtung ausgerichtet ist und das Trailerachsmodul (5; 26; 34) bei unverriegelter Verriegelungsvorrichtung und bestehender Sattelplatte-Königszapfen-Verbindung, insbesondere für einen Rangiermodus mit oder ohne Zugmaschine (2), gegenüber dem Trailer-Aufbau (4) schwenkbar ist, wobei vorzugsweise, insbesondere im Bereich einer Verriegelungseinrichtung, eine Kulissen- oder Gleitführung zur Führung des Trailerachsenmoduls bei einer Verschwenkung relativ zu dem Trailer-Aufbau vorgesehen ist.

3. Straßenfahrzeug-Zugkombination nach Anspruch 2, **dadurch gekennzeichnet, dass** die Sattelplatte (12) auf dem Trailerachsmodul (5; 26; 34), insbesondere mit in Fahrtrichtung weisendem Einfahrspalt (13), für den Königszapfen (14) des Trailer-Aufbaus (4), im vorderen Bereich des Trailerachsmoduls (5; 26; 34) angeordnet ist und im hinteren Bereich des Trailerachsenmoduls (5; 26; 34) zu beiden Seiten je ein ausfahrbarer Verriegelungsbolzen (15, 16) oder eine Bolzenaufnahme (17) sowie eine Kulissen- oder Gleitführung angeordnet sind, wobei bevorzugt vorgesehen ist, dass das Trailerachsmodul (5; 26; 34) mit entsprechender Sensorik automatisch oder manuell am Trailer-Aufbau (4) koppelbar und/oder verriegelbar ist.

4. Straßenfahrzeug-Zugkombination nach einem der Ansprüche 1 bis 3, **dadurch gekennzeichnet, dass** das Trailerachsmodul (5; 26; 34) wenigstens eine gelenkte Achse (10; 33; 35), vorzugsweise als nicht antreibbare Laufachse mit Achsschenkellenkung (11) und Lenktrapez, aufweist, wobei die Lenkung (11) im verriegelten Fahrmodus in Geradeausrichtung blockierbar (18) ist, wobei bevorzugt vorgesehen ist, dass die Lenkung (11) durch einen radselektiven bzw. seitenweisen Antrieb einer Triebachse mit zugeordneter Drehmomentverteilung unterstützbar ist und/oder dass das wenigstens eine linke und wenigstens eine rechte Rad der gelenkten Achse (10; 33; 35) zur Verschleißminimierung nach Ackermann lenkbar sind.

5. Straßenfahrzeug-Zugkombination nach einem der Ansprüche 1 bis 4, **dadurch gekennzeichnet, dass** das Trailerachsmodul (26; 34) als Kombination Trailerachsmodul-Dolly ausgebildet ist und heckseitig mit einem Bereich (27) für eine zweite Sattelplatte (28) zur Ankopplung eines weiteren Trailers (25) verlängert ist und in diesem Verlängerungsbereich (27) wenigstens eine, insbesondere lenkbare und/oder antreibbare, Achse (33; 35) angeordnet ist.

6. Straßenfahrzeug-Zugkombination nach einem der Ansprüche 1 bis 5, **dadurch gekennzeichnet, dass** der Trailer-Aufbau (4) hintere einfahr- und/oder anklappbare Stützfüße (22) und wenigstens ein vorderes einfahr- und/oder anklappbares Stützrad (20) sowie zwei Königszapfen (6, 14) aufweist und die Höhe der Stützfüße (22) und des wenigstens einen Stützrads (20) wenigstens die Höhe des Trailerachsmoduls (5; 26; 34) aufweist, wobei bevorzugt vorgesehen ist, dass die Betätigung der Stützfüße (22) und/oder des wenigstens einen Stützrads (20) automatisch, vorzugsweise vom Trailerachsmodul (5; 26; 34) gesteuert, erfolgt.

7. Straßenfahrzeug-Zugkombination nach einem der Ansprüche 1 bis 6, **dadurch gekennzeichnet, dass** das wenigstens eine linke und das wenigstens eine rechte Rad einer zuschaltbaren Triebachse (9; 31) unter Berücksichtigung betriebsbedingter Drehzahlunterschiede antreibbar sind.

8. Straßenfahrzeug-Zugkombination nach einem der Ansprüche 1 bis 7, **dadurch gekennzeichnet,**
**dass** wenigstens ein Antriebsmodul des Trailerachsmoduls (5; 26; 34) eine Versorgungsleitung für eine Energieversorgung, insbesondere zur steckbaren Kopplung, mit einer Zugmaschine (2) aufweist, und/oder
**dass** das Antriebsmodul eine Datenleitung zu einer Zugmaschine (2) und/oder eine kabellose Sendeeinrichtung zur Kommunikation mit der Zugmaschine (2), insbesondere für eine Übermittlung und/oder zum Datenaustausch von Status- und/oder Steuerungsdaten, aufweist.

9. Straßenfahrzeug-Zugkombination nach einem der Ansprüche 1 bis 8, **dadurch gekennzeichnet, dass** wenigstens ein Antriebsmodul des Trailermoduls (5; 26; 34) eine Energiespeichereinheit (19) aufweist, aus der die Antriebseinheit gesteuert ausschließlich oder zusätzlich zu einer weiteren Energieversorgung zumindest über einen begrenzten Zeitraum mit Energie versorgbar ist.

10. Straßenfahrzeug-Zugkombination nach einem der Ansprüche 1 bis 9, **dadurch gekennzeichnet, dass** wenigstens ein Achsmodul des Trailerachsmoduls (5; 26; 34) fahrbetriebsabhängig und bedarfsweise, insbesondere mit variierbarer Leistung, bei zumindest einem Teil der folgenden, durch Kommunikation mit der Sattelzugmaschine (2) und/oder durch eine Sensorik des Trailerachsmoduls (5; 26; 34) vorgegebenen oder festgestellten Betriebszuständen selbsttätig aktivierbar und zuschaltbar ist oder individuell von Hand, insbesondere ferngesteuert, zuschaltbar ist:
a) im kompletten Zugbetrieb und Fahrmodus beim Beschleunigen und/oder in Steigungen und/oder beim Anfahren und/oder
b) als Boostfunktion zur kurzfristigen Überbrückung bzw. Ergänzung eines Zugmaschinen-Verbrennungsmotormoments, insbesondere mit einer (teilweisen) Entladung eines Energiespeichers (19),
c) in abgeschlossenen Geländen, zum Beispiel in Logistikzentren zum Rangieren an Laderampen, insbesondere mit einer entriegelten Verriegelungseinrichtung (16; 18) zwischen Trailer-Aufbau (4) und Trailerachsmodul (5; 26; 34) und insbesondere ohne Zugmaschinenantrieb, wobei dann die Energieversorgung aus einem Energiespeicher (19) oder berührungslos mittels Ladeschleifen im Boden erfolgt, und/oder
d) zur Steigerung der Bremswirkung im Gefälle, insbesondere in Verbindung mit einer Aufladung eines Energiespeichers (19) durch Rekuperation, und/oder
e) zur temporären Energiespeicherung in Kombination mit einem GPS-abhängigen Geschwindigkeitsregler.

11. Straßenfahrzeug-Zugkombination nach einem der Ansprüche 1 bis 10, **dadurch gekennzeichnet, dass** in einer Antriebseinheit des Antriebsmoduls wenigstens ein Elektromotor verwendet ist, der direkt an der Triebachse (9; 31), insbesondere direkt an den angetriebenen Rädern, angeordnet ist und die Stromversorgung sowie eine Signalkommunikation über eine Steckverbindung, insbesondere über eine Hochvoltsteckverbindung, von der Zugmaschine (2) her und/oder über Ladeschleifen im Boden erfolgt, wobei vorzugsweise im Antriebsmodul ein elektrischer Energiespeicher (19) zur Rekuperation und zum Energiemanagement angeordnet ist.

12. Straßenfahrzeug-Zugkombination nach einem der Ansprüche 1 bis 10, **dadurch gekennzeichnet,**
**dass** in der Antriebseinheit des Antriebsmoduls wenigstens ein bedarfsgerecht zuschaltbarer Hydraulikmotor verwendet ist und die Energieversorgung über die Zugmaschine mittels einer koppelbaren Hydraulikleitung erfolgt, wobei vorzugsweise im Antriebsmodul ein Druckspeicher als, insbesondere kurzfristige, Energiespeichereinheit vorgesehen ist, oder
**dass** in der Antriebseinheit eines Antriebsmoduls eine Kombination aus Hydraulikmotor und einer elektrischen Maschine vorgesehen ist, wobei die Energieversorgung hydraulisch und der Energiehaushalt im Antriebsmodul elektrisch organisierbar ist.

13. Trailerachsmodul für einen Trailer (3) als Sattelauflieger, insbesondere für eine Straßenfahrzeug-Zugkombination nach einem der vorhergehenden Ansprüche, mit wenigstens zwei Achsen (9, 10; 31, 32, 33; 35) und mit einer Antriebseinheit (36), mittels der die Räder wenigstens einer Achse (9; 31) und somit auch das Trailerachsmodul (5; 26; 34) antreibbar ist, und wobei das Trailerachsmodul (5; 26; 34) an einem unteren hinteren Bereich eines Trailer-Aufbaus (4) des Trailers von unten her an den Trailer-Aufbau (4) an- und abkoppelbar sowie verriegelbar ist.

14. Trailer als Sattelauflieger, insbesondere für eine Straßenfahrzeug-Zugkombination nach einem der Ansprüche 1 bis 12, mit einem Trailer-Aufbau und wenigstens zwei im hinteren Aufbaubereich angeordneten Achsen,
**dadurch gekennzeichnet,**
**dass** der Trailer-Aufbau (4) in der Art einer aufständerbaren Wechselbrücke ausgebildet ist, und
**dass** ein eigenständig fahrbares, im unteren hinteren Aufbaubereich von unten her an den Trailer-Aufbau (4) an- und abkoppelbares sowie verriegelbares Trailerachsmodul (5; 26; 34) vorgesehen ist, an dem die wenigstens zwei Achsen (9, 10; 31, 32, 33; 35) angeordnet sind.

## Claims

1. Road-vehicle tractor-trailer combination, having a tractor, in particular having a semitrailer tractor, and a trailer in the form of a semitrailer, wherein the trailer has a trailer body and at least two axles arranged in the rear body region,
**characterized**
**in that** the trailer body (4) is in the form of a swap body that can rest on supports,
**in that** an independently driveable trailer axle module (5; 26; 34), which can be coupled and uncoupled to/from and locked to the trailer body (4) from below in the lower rear body region and on which the at least two axles (9, 10; 31, 32, 33; 35) are arranged, is provided, and
**in that** at least one axle of the trailer axle module (5; 26; 34) is designed as a drive module and temporary live axle (9; 31) of the tractor-trailer combination (1) with a drive unit (36) which can be automatically controlled and selected for a limited period of time by means of a control unit (37) in accordance with the determined driving operation state and the determined drive requirement of the tractor-trailer combination (1).

2. Road-vehicle tractor-trailer combination according to Claim 1, **characterized in that** the device for coupling and uncoupling the trailer axle module (5; 26; 34) to and from the trailer body (4) is designed to correspond to a fifth wheel pickup plate/kingpin connection with a fifth wheel pickup plate (12) on the trailer axle module (5; 26; 34) and a kingpin (14) on the underside of the trailer body (4), and
**in that** the locking device has at least one actuable locking pin (15, 16) on the trailer axle module (5; 26; 34) and/or on the trailer body (4), wherein the trailer axle module (5; 26; 34) is designed for an on-road travelling mode in a straightahead direction of travel in the coupled state and with the locking device locked, and the trailer axle module (5; 26; 34) can be pivoted relative to the trailer body (4) with the locking device unlocked and the fifth wheel pickup plate/kingpin connection still operative, in particular for a manoeuvring mode with or without the tractor (2), wherein a slotted guide or sliding guide for guiding the trailer axle module during a pivoting motion relative to the trailer body is preferably provided, in particular in the region of a locking unit.

3. Road-vehicle tractor-trailer combination according to Claim 2, **characterized in that** the fifth wheel pickup plate (12) is arranged on the trailer axle module (5; 26; 34) in the forward region of the trailer axle module (5; 26; 34), in particular with the insertion slot (13) for the kingpin (14) of the trailer body (4) facing in the direction of travel, and an extendable locking pin (15, 16) or a pin receptacle (17) as well as a slotted guide or sliding guide are arranged on both sides in the rear region of the trailer axle module (5; 26; 34), wherein there is preferably provision for the trailer axle module (5; 26; 34) to be couplable and/or lockable automatically or manually to the trailer body (4) by means of an appropriate sensor system.

4. Road-vehicle tractor-trailer combination according to one of Claims 1 to 3, **characterized in that** the trailer axle module (5; 26; 34) has at least one steered axle (10; 33; 35), preferably in the form of a non-driveable idler axle with axle-pivot steering (11) and a steering trapezium, wherein the steering (11) can be blocked (18) in straightahead alignment in the locked driving mode, wherein provision is preferably made for the steering (11) to be assisted by wheel-selective or side-wise driving of a live axle with associated torque distribution, and/or **in that** the at least one left-hand and at least one right-hand wheel of the steered axle (10; 33; 35) can be steered in accordance with the Ackermann principle to reduce wear.

5. Road-vehicle tractor-trailer combination according to one of Claims 1 to 4, **characterized in that** the trailer axle module (26; 34) is designed as a trailer axle module/dolly combination and is extended at the rear by a region (27) for a second fifth wheel pickup plate (28) for coupling an additional trailer (25), and at least one axle (33; 35), in particular a steerable and/or driveable axle, is arranged in this extension region (27).

6. Road-vehicle tractor-trailer combination according to one of Claims 1 to 5, **characterized in that** the trailer body (4) has rear retractable and/or fold-up supporting feet (22) and at least one front retractable and/or fold-up supporting wheel (20) as well as two kingpins (6, 14), and the height of the supporting feet (22) and of the at least one supporting wheel (20) is at least the height of the trailer axle module (5; 26; 34), wherein provision is preferably made for the actuation of the supporting feet (22) and/or of the at least one supporting wheel (20) to take place in an automatically controlled manner, preferably in a manner controlled by the trailer axle module (5; 26; 34).

7. Road-vehicle tractor-trailer combination according to one of Claims 1 to 6, **characterized in that** the at least one left-hand and the at least one right-hand wheel of a selectable live axle (9; 31) can be driven while taking into account service-related differences in rotational speed.

8. Road-vehicle tractor-trailer combination according to one of Claims 1 to 7, **characterized**
**in that** at least one drive module of the trailer axle module (5; 26; 34) has a supply line for a power supply, in particular for plug-in coupling, with a tractor (2), and/or
**in that** the drive module has a data line leading to a tractor (2) and/or a wireless transmitter for communication with the tractor (2), in particular for transferring and/or exchanging status and/or control data.

9. Road-vehicle tractor-trailer combination according to one of Claims 1 to 8, **characterized in that** at least one drive module of the trailer module (5; 26; 34) has an energy storage unit (19), from which the drive unit can be supplied with power in a controlled manner, at least for a limited period of time, exclusively or in addition to another power supply.

10. Road-vehicle tractor-trailer combination according to one of Claims 1 to 9, **characterized in that** at least one axle module of the trailer axle module (5; 26; 34) can be automatically activated and selected or can be selected individually by hand, in particular by remote control, in a driving-dependent manner and as required, in particular with variable power, in at least some of the following operating states specified or detected by communication with the semitrailer tractor (2) and/or by a sensor system of the trailer axle module (5; 26; 34):
a) in full tractor operation and driving mode during acceleration and/or on slopes and/or when starting off, and/or
b) as a boost function for short-term bridging or supplementation of an internal combustion engine torque of the tractor, in particular involving (partial) discharge of an energy storage device (19),
c) in enclosed areas, e.g. in logistics centres, for manoeuvring on loading ramps, in particular with an unlocked locking unit (16; 18) between the trailer body (4) and the trailer axle module (5; 26; 34) and, in particular, without drive by the tractor, wherein the power supply is then taken from a power supply device (19) or contactlessly by means of charging loops in the ground, and/or
d) to boost the braking action on a downhill slope, particularly in conjunction with charging of an energy storage device (19) by energy recovery, and/or
e) for temporary energy storage in combination with a GPS-dependent speed governor.

11. Road-vehicle tractor-trailer combination according to one of Claims 1 to 10, **characterized in that** at least one electric motor is used in a drive unit of the drive module, said electric motor being arranged directly on the live axle (9; 31), in particular directly on the driven wheels, and the power supply and signal communication take place via a plug connection, in particular via a high-voltage plug connection, from the tractor (2) and/or via charging loops in the ground, wherein an electric energy storage device (19) for energy recovery and for energy management is preferably arranged in the drive module.

12. Road-vehicle tractor-trailer combination according to one of Claims 1 to 10, **characterized**
**in that** at least one hydraulic motor that can be selected as required is used in the drive unit of the drive module, and the power supply takes place via the tractor by means of a couplable hydraulic line, wherein a pressure reservoir is preferably provided in the drive module as an energy storage unit, in particular a short-term energy storage unit, or
**in that** a combination of a hydraulic motor and an electric machine is provided in the drive unit of a drive module, wherein the power supply can be organised hydraulically and the energy balance in the drive module can be organised electrically.

13. Trailer axle module for a trailer (3) in the form of a semitrailer, in particular for a road-vehicle tractor-trailer combination according to one of the preceding claims, having at least two axles (9, 10; 31, 32, 33; 35) and having a drive unit (36), by means of which the wheels of at least one axle (9; 31) and thus also the trailer axle module (5; 26; 34) can be driven, and wherein the trailer axle module (5; 26; 34) can be coupled and uncoupled to/from and locked to a trailer body (4) of the trailer from below in a lower rear region of the trailer body (4).

14. Trailer in the form of a semitrailer, in particular for a road-vehicle tractor-trailer combination according to one of Claims 1 to 12, having a trailer body and at least two axles arranged in the rear body region,
**characterized**
**in that** the trailer body (4) is in the form of a swap body that can rest on supports, and in that an independently driveable trailer axle module (5; 26; 34), which can be coupled and uncoupled to/from and locked to the trailer body (4) from below in the lower rear body region and on which the at least two axles (9, 10; 31, 32, 33; 35) are arranged, is provided.

## Revendications

1. Combinaison de train routier, comportant un véhicule tracteur, en particulier comportant un véhicule tracteur pour semi-remorque, et une remorque en tant que semi-remorque, la remorque comprenant une carrosserie de remorque et au moins deux essieux disposés dans la zone de carrosserie arrière,
**caractérisée en ce que**
la carrosserie de remorque (4) est réalisée à la manière d'une caisse mobile pouvant être surélevée,
**en ce qu'**un module d'essieux de remorque (5 ; 26 ; 34) mobile de manière autonome et pouvant être accouplé à la carrosserie de remorque (4) et pouvant être désaccouplé de celle-ci par le bas et pouvant être verrouillé sur celle-ci dans la région de carrosserie arrière inférieure est prévu, module sur lequel les au moins deux essieux (9, 10 ; 31, 32, 33 ; 35) sont disposés, et
**en ce qu'**au moins un essieu du module d'essieux de remorque (5 ; 26 ; 34) est réalisé sous forme de module d'entraînement et d'essieu moteur (9 ; 31) par intermittence de la combinaison de train routier (1) comportant une unité d'entraînement (36) pouvant être commandée automatiquement et pouvant être connectée de manière limitée dans le temps au moyen d'une unité de commande (37) en fonction de l'état de fonctionnement de conduite déterminé et des besoins d'entraînement déterminés de la combinaison de train routier (1).

2. Combinaison de train routier selon la revendication 1, **caractérisée en ce que** le dispositif pour l'accouplement du module d'essieux de remorque (5 ; 26 ; 34) à la carrosserie de remorque (4) et le désaccouplement de celle-ci est réalisé de manière correspondante à une liaison plaque de sellette/pivot d'attelage comportant une plaque de sellette (12) sur le module d'essieux de remorque (5 ; 26 ; 34) et un pivot d'attelage (14) sur le côté inférieur de la carrosserie de remorque (4), et
**en ce que** le dispositif de verrouillage comprend au moins un axe de verrouillage (15, 16) pouvant être actionné sur le module d'essieux de remorque (5 ; 26 ; 34) et/ou sur la carrosserie de remorque (4), le module d'essieux de remorque (5 ; 26 ; 34) étant, dans l'état accouplé, lorsque le dispositif de verrouillage est verrouillé, orienté dans la direction de conduite en ligne droite pour un mode de conduite sur route et le module d'essieux de remorque (5 ; 26 ; 34) pouvant pivoter par rapport à la carrosserie de remorque (4) lorsque le dispositif de verrouillage est déverrouillé et en cas de liaison plaque de sellette/pivot d'attelage existante, en particulier pour un mode de manoeuvre avec ou sans véhicule tracteur (2), un guide à coulisse ou à glissement pour le guidage du module d'essieux de remorque en cas de pivotement par rapport à la carrosserie de remorque étant de préférence prévu, en particulier dans la région d'un dispositif de verrouillage.

3. Combinaison de train routier selon la revendication 2, **caractérisée en ce que** la plaque de sellette (12) sur le module d'essieux de remorque (5 ; 26 ; 34), en particulier avec la fente d'insertion (13) tournée dans la direction de conduite, pour le pivot d'attelage (14) de la carrosserie de remorque (4), est disposée dans la région avant du module d'essieux de remorque (5 ; 26 ; 34), et un axe de verrouillage (15, 16) pouvant être sorti ou un logement d'axe (17) ainsi qu'un guide à coulisse ou à glissement étant disposés dans la région arrière du module d'essieux de remorque (5 ; 26 ; 34) des deux côtés respectivement, le module d'essieux de remorque (5 ; 26 ; 34) pouvant de préférence être accouplé à et/ou pouvant être verrouillé sur la carrosserie de remorque (4) automatiquement à l'aide d'un système de capteurs correspondant ou manuellement.

4. Combinaison de train routier selon l'une des revendications 1 à 3, **caractérisée en ce que** le module d'essieux de remorque (5 ; 26 ; 34) comprend au moins un essieu directeur (10 ; 33 ; 35), de préférence sous forme d'essieu porteur ne pouvant pas être entraîné et doté d'une direction à fusée d'essieu (11) et d'un trapèze de direction, la direction (11) pouvant être bloquée (18) dans la direction de conduite en ligne droite dans le mode de conduite verrouillé, la direction (11) pouvant de préférence être assistée par un entraînement à sélection de roue ou sur différents côtés d'un essieu moteur à répartition de couple associée dans le mode de conduite verrouillé et/ou **en ce que** l'au moins une roue gauche et l'au moins une roue droite de l'essieu directeur (10 ; 33 ; 35) peuvent être dirigées selon Ackermann pour réduire l'usure au minimum.

5. Combinaison de train routier selon l'une des revendications 1 à 4, **caractérisée en ce que** le module d'essieux de remorque (26 ; 34) est réalisé sous la forme d'une combinaison module d'essieux de remorque/diabolo et est prolongé du côté arrière par une région (27) pour une deuxième plaque de sellette (28) pour l'accouplement d'une autre remorque (25), et au moins un essieu (33 ; 35), en particulier dirigeable et/ou pouvant être entraîné, est disposé dans cette région de prolongement (27).

6. Combinaison de train routier selon l'une des revendications 1 à 5, **caractérisée en ce que** la carrosserie de remorque (4) comprend des pieds d'appui arrière (22) pouvant être rentrés et/ou pouvant être rabattus et au moins une roue d'appui avant (20) pouvant être rentrée et/ou pouvant être rabattue ainsi que deux pivots d'attelage (6, 14) et la hauteur des pieds d'appui (22) et de l'au moins une roue d'appui (20) comprend au moins la hauteur du module d'essieux de remorque (5 ; 26 ; 34), de préférence l'actionnement des pieds d'appui (22) et/ou de l'au moins une roue d'appui (20) s'effectuant automatiquement, de préférence de manière commandée par le module d'essieux de remorque (5 ; 26 ; 34).

7. Combinaison de train routier selon l'une des revendications 1 à 6, **caractérisée en ce que** l'au moins une roue gauche et l'au moins une roue droite d'un essieu moteur (9 ; 31) pouvant être connecté peuvent être entraînées en prenant en compte de différences de vitesse de rotation causées par le fonctionnement.

8. Combinaison de train routier selon l'une des revendications 1 à 7, **caractérisée en ce**
**qu'**au moins un module d'entraînement du module d'essieux de remorque (5 ; 26 ; 34) comprend une ligne d'alimentation pour une alimentation en énergie, en particulier pour l'accouplement enfichable à un véhicule tracteur (2), et/ou
en ce que le module d'entraînement comprend une ligne de transmission de données vers un véhicule tracteur (2) et/ou un dispositif d'émission sans fil pour la communication avec le véhicule tracteur (2), en particulier pour une transmission et/ou pour l'échange de données d'état et/ou de commande.

9. Combinaison de train routier selon l'une des revendications 1 à 8, **caractérisée en ce qu'**au moins un module d'entraînement du module de remorque (5 ; 26 ; 34) comprend une unité d'accumulation d'énergie (19) à partir de laquelle l'unité d'entraînement peut être alimentée en énergie de manière commandée exclusivement ou en plus d'une autre alimentation en énergie au moins pendant une durée limitée.

10. Combinaison de train routier selon l'une des revendications 1 à 9, **caractérisée en ce qu'**au moins un module d'essieux du module d'essieux de remorque (5 ; 26 ; 34) peut être activé et peut être connecté automatiquement en fonction du fonctionnement de conduite et selon les besoins, en particulier avec une puissance variable, dans le cas d'au moins une partie des états de fonctionnement suivants prédéfinis ou déterminés par communication avec le véhicule tracteur pour semi-remorque (2) et/ou au moyen d'un système de capteurs du module d'essieux de remorque (5 ; 26 ; 34) ou peut être connecté individuellement manuellement, en particulier de manière télécommandée :
a) dans le fonctionnement de traction complet et le mode de conduite en cas d'accélération et/ou en montée et/ou en cas de démarrage et/ou
b) comme fonction d'amplification pour surmonter à court terme un couple de moteur à combustion interne de véhicule tracteur ou s'ajouter à celui-ci, en particulier avec une décharge (partielle) d'un accumulateur d'énergie (19),
c) dans des sites fermés, par exemple dans des centres de logistique, pour la manœuvre sur des rampes de chargement, en particulier avec un dispositif de verrouillage (16 ; 18) déverrouillé entre la carrosserie de remorque (4) et le module d'essieux de remorque (5 ; 26 ; 34) et en particulier sans entraînement de véhicule tracteur, l'alimentation en énergie s'effectuant alors à partir d'un accumulateur d'énergie (19) ou sans contact par des boucles de charge dans le sol, et/ou
d) pour l'augmentation de l'action de freinage en descente, en particulier en association avec une charge d'un accumulateur d'énergie (19) par récupération, et/ou
e) pour l'accumulation d'énergie temporaire en combinaison avec un régulateur de vitesse dépendant du GPS.

11. Combinaison de train routier selon l'une des revendications 1 à 10, **caractérisée en ce qu'**au moins un moteur électrique est utilisé dans une unité d'entraînement du module d'entraînement, lequel moteur électrique est disposé directement sur l'essieu moteur (9 ; 31), en particulier directement sur les roues entraînées, et l'alimentation en courant ainsi qu'une communication de signaux s'effectuent par le biais d'une connexion enfichable, en particulier par le biais d'une connexion enfichable haute tension, à partir du véhicule tracteur (2) et/ou par le biais de boucles de charge dans le sol, un accumulateur d'énergie électrique (19) servant à la récupération et à la gestion d'énergie étant disposé de préférence dans le module d'entraînement.

12. Combinaison de train routier selon l'une des revendications 1 à 10, **caractérisée en ce**
**qu'**au moins un moteur hydraulique pouvant être connecté en fonction des besoins est utilisé dans l'unité d'entraînement du module d'entraînement et l'alimentation en énergie s'effectue par le biais du véhicule tracteur au moyen d'une conduite hydraulique pouvant être accouplée, un accumulateur de pression étant prévu comme unité d'accumulation d'énergie, en particulier à court terme, de préférence dans le module d'entraînement, ou
en ce qu'une combinaison constituée du moteur hydraulique et d'une machine électrique est prévue dans l'unité d'entraînement d'un module d'entraînement, l'alimentation en énergie pouvant être organisée hydrauliquement et la gestion d'énergie dans le module d'entraînement pouvant être organisée électriquement.

13. Module d'essieux de remorque pour une remorque (3) en tant que semi-remorque, en particulier pour une combinaison de train routier selon l'une des revendications précédentes, comportant au moins deux essieux (9, 10 ; 31, 32, 33 ; 35) et comportant une unité d'entraînement (36) au moyen de laquelle les roues d'au moins un essieu (9 ; 31) et par conséquent également le module d'essieux de remorque (5 ; 26 ; 34) peuvent être entraînés, et le module d'essieux de remorque (5 ; 26 ; 34) pouvant être accouplé à une carrosserie de remorque (4) et désaccouplé de celle-ci par le bas et pouvant être verrouillé sur celle-ci au niveau d'une région inférieure de la carrosserie de remorque (4).

14. Remorque en tant que semi-remorque, en particulier pour une combinaison de train routier selon l'une des revendications 1 à 12, comportant une carrosserie de remorque et au moins deux essieux disposés dans la zone de carrosserie arrière,
**caractérisée en ce que**
la carrosserie de remorque (4) est réalisée à la manière d'une caisse mobile pouvant être surélevée, et
**en ce qu'**un module d'essieux de remorque (5 ; 26 ; 34) mobile de manière autonome et pouvant être accouplé à la carrosserie de remorque (4) et pouvant être désaccouplé de celle-ci par le bas et pouvant être verrouillé sur celle-ci dans la région de carrosserie arrière inférieure est prévu, module sur lequel les au moins deux essieux (9, 10 ; 31, 32, 33 ; 35) sont disposés.
